# EUROPÄISCHE PATENTSCHRIFT

(11) **EP 1 935 717 B1**
(45) Veröffentlichungstag und Bekanntmachung des Hinweises auf die Patenterteilung: **14.05.2014**
(21) Anmeldenummer: 07123016.3
(22) Anmeldetag: 12.12.2007
(51) Int. Cl.: B60Q 1/26, E05B 81/76, E05B 17/10, B60J 5/04, E05B 1/00

(54) **Betätigungsvorrichtung zum Schließen und Öffnen eines beweglichen Teils**
Actuating device for opening and closing a moveable component
Dispositif d'actionnement destiné à la fermeture et l'ouverture d'une pièce mobile

(30) Priorität: 20.12.2006 DE 102006061518
(43) Veröffentlichungstag der Anmeldung: 25.06.2008
(73) Patentinhaber: Huf Hülsbeck & Fürst GmbH & Co. KG, 42551 Velbert (DE)
(72) Erfinder: Kalesse, Michael, 40885, Ratingen (DE); Rohlfing, Manfred, 42549, Velbert (DE)
(74) Vertreter: Vogel, Andreas

(56) Entgegenhaltungen:
- EP-A- 1 533 451
- EP-A- 1 641 008
- WO-A-2005/124066
- DE-A1- 10 359 950
- DE-A1- 19 856 902

## Beschreibung

Die Erfindung betrifft eine Betätigungsvorrichtung gemäß dem Oberbegriff des Anspruchs 1. Eine solche Betätigungsvorrichtung ist aus DE 10359950 A1 bekannt.

Dem Fachmann ist eine Vielzahl an Betätigungsvorrichtungen bekannt, die zum Schließen und Öffnen eines beweglichen Teils eines Kraftfahrzeuges dienen. In der DE 103 59 950 A1 ist ein Türaußengriff eines Kraftfahrzeuges offenbart, wobei ein Tastschalter innerhalb einer Aussparung des Türaußengriffes vorgesehen ist. Unmittelbar an der dem Außenbereich des Türaußengriffes abgewandten Seite des Tastschalters ist eine Lampe angeordnet, die bei Bedarf Licht emittiert und somit den Tastschalter beleuchtet.

Hierdurch wird erreicht, dass insbesondere bei Dunkelheit der Benutzer die exakte Position des Tastschalters am Türaußengriff erkennen kann. Einer der Nachteile dieses Licht emittierenden Türaußengriffes ist, dass der Tastschalter, insbesondere aufgrund seiner konstruktiven Ausgestaltung, aufwendig aufgebaut ist, wodurch sich der Herstellungsaufwand eines derartigen Türaußengriffes erhöht.

Die Aufgabe der vorliegenden Erfindung ist es, die oben genannten Nachteile zu vermeiden, insbesondere eine Betätigungsvorrichtung zum Schließen und Öffnen eines beweglichen Teils eines Kraftfahrzeuges zu schaffen, die die genannten Nachteile vermeidet, insbesondere eine Betätigungsvorrichtung bereitgestellt wird, die eine zufriedenstellende Funktionsfähigkeit aufweist, für den Benutzer leichtgängig zu betätigen ist und gleichzeitig für definierte Zustände eine Beleuchtung des Betätigungselementes erfolgt.

Die Erfindung wird mit den Merkmalen des Patentanspruches 1 gelöst. In den abhängigen Ansprüchen sind bevorzugte Ausführungsformen der Erfindung offenbart.

Dazu ist erfindungsgemäß vorgesehen, dass das Lichtelement und das Betätigungselement in einem innerhalb der Aussparung vorgesehenen Druckbetätiger integriert sind, das Lichtelement eine Auflagefläche aufweist, auf der das Betätigungselement zumindest teilweise angeordnet ist, und das Betätigungselement aus einem ersten Material und das Lichtelement aus einem zweiten Material ausgeführt sind, wobei das erste Material und das zweite Material aus Kunststoff sind, und wobei das erste Material aus einem weicheren Kunststoff gebildet ist als das zweite Material. Unter der Bezeichnung erstes und/oder zweites Material ist ebenfalls mit umfasst, dass das erste und/oder das zweite Material ein Verbund oder eine Mischung aus zumindest zwei verschiedenen Einzelmaterialien sein kann. Besonders vorteilhaft ist, dass das Lichtelement sowie das Betätigungselement ein Bauteil des Druckbetätigers bilden, wodurch sich die Montage des Druckbetätigers an der Betätigungsvorrichtung wesentlich vereinfacht. Das Betätigungselement sowie das Lichtelement bilden somit ein einstückiges Bauteil, wobei das Betätigungselement aus einem formelastischen, weichen Kunststoff ausgeführt ist. Hierbei kann das erste Material diverse Weichkomponenten enthalten, die eine entsprechende Formelastizität des Betätigungselementes hervorrufen.

Durch die Ausführung des Betätigungselementes mit einem weichen Kunststoff wird eine angenehme Haptik für den Anwender bei Betätigung des Druckbetätigers hervorgerufen. Während der Anwender auf das Betätigungselement leicht drückt, entsteht eine leichte Verformung des Betätigungselementes, zumindest an dem Bereich, wo die Kraft vom Anwender auf das Betätigungselement übertragen wird. Damit der Druckbetätiger in seiner Funktionalität nicht wesentlich beeinträchtigt wird, ist das Betätigungselement zumindest teilweise an der Auflagefläche des Lichtelementes unmittelbar angeordnet, wobei die Auflagefläche, die aus dem härteren zweiten Material gebildet ist, als eine Art tragendes Teil für das Betätigungselement dient. Gleichzeitig kann das Lichtelement das Betätigungselement bei Bedarf beleuchten, wodurch der Benutzer, insbesondere bei Dunkelheit, die exakte Position des Betätigungselementes erkennen kann.

In einer möglichen Ausführungsform der Erfindung weist der Druckbetätiger einen aus dem ersten Material ausgeführten Randbereich auf, der balgartig ausgeführt ist. Der Randbereich liegt vorzugsweise unmittelbar an dem der Aussparung zugewandten Bereich des Gehäuses an und dichtet den Innenbereich des Gehäuses vor Schmutz, Feuchtigkeit ect. zuverlässig ab.

Vorteilhafterweise ist der Druckbetätiger in eine erste und in eine zweite Stellung bewegbar, wobei in der zweiten Stellung das Betätigungselement einen innerhalb des Gehäuses angeordneten Schalter kontaktiert. Bei dem Schalter kann es sich beispielsweise um einen elektrischen Schalter handeln, der z. B. zusätzlich mit einem Druckknopf versehen ist. Wird dieser Druckknopf durch den Druckbetätiger in der zweiten Stellung aktiviert, wird durch den Schalter ein elektrisches Signal ausgelöst, das eine kraftfahrzeugseitige Aktion auslöst. Vorteilhafterweise übt der Randbereich durch seine balgartige Ausgestaltung eine gewisse Rückstellkraft aus, mit der der Druckbetätiger von seiner zweiten Stellung in die erste Stellung zurückbewegt wird. Alternativ und/oder zusätzlich kann ein Federelement am Druckbetätiger angeordnet sein, welches mit einer entsprechenden Federkraft auf den Druckbetätiger wirkt und somit diesen in die erste Stellung zurückbewegen kann.

In einer bevorzugten Ausführungsform bildet der Druckbetätiger mit dem Betätigungselement, dem Lichtelement und dem Randbereich ein gemeinsames Bauteil, das durch ein Mehrkomponenten-Spritzgussverfahren hergestellt ist. Vorzugsweise ist dieses gemeinsame Bauteil ein Zweikomponenten-Spritzgussbauteil. In einer bevorzugten Ausgestaltung der Erfindung wird im Zweikomponenten-Spritzgussverfahren zunächst das Lichtelement hergestellt und anschließend werden der Randbereich sowie das Betätigungselement unmittelbar am Lichtelement angespritzt.

Eine verbessernde Maßnahme sieht vor, dass das erste Material ein anorganischer Zweikomponenten-Elastomerwerkstoff ist. Hierdurch kann eine Dauertemperaturbeständigkeit im Bereich von ca. -50° C bis 80° C gewährleistet werden. Gleichzeitig hat sich gezeigt, dass die elastischen Eigenschaften des ersten Materials über einen breiten Temperaturbereich nahezu unverändert bleiben, wodurch die Funktionalität des Druckbetätigers nicht beeinträchtigt wird. Der anorganische Zweikomponenten-Elastomerwerkstoff kann des Weiteren gut in diverse Farben eingefärbt werden. Aus designtechnischen Gesichtspunkten bietet es sich an, dass das erste weichere Material eine Farbe aufweist, die dem Gehäuse der Betätigungsvorrichtung entspricht. In einer möglichen Ausführungsform hat das erste Material einen Härtegrad von Shore A 15 bis Shore A 90, wodurch eine erhöhte Lebensdauer des Druckbetätigers erzielt werden kann.

In einer möglichen Alternative der Erfindung ist das Lichtelement eine aktive Lichtquelle, von der unmittelbar Licht emittiert wird und in den Außenbereich der Betätigungsvorrichtung austritt. Beispielsweise kann das Lichtelement als OLED (Organic Light-Emitting Diode) ausgeführt sein, die eine Kathodenschicht, eine Anodenschicht sowie zwischen beiden Schichten eine organische, Licht emittierende Schicht aufweist. Hierbei kann die Kathodenschicht reflektierend ausgeführt sein und das erzeugte Licht verlässt die OLED im Wesentlichen zu einer Seite. Durch Anlegen einer Spannung an der Kathodenschicht sowie an der Anodenschicht entsteht in der organischen Schicht Licht, welches an der Kathodenschicht reflektiert wird und durch die Anodenschicht in Richtung Außenbereich der Betätigungsvorrichtung geleitet wird. Neben einer hohen Helligkeit weist dieses Lichtelement einen relativ niedrigen Energieverbrauch auf.

In einer weiteren Alternative der Betätigungsvorrichtung ist innerhalb des Gehäuses eine Lichtquelle angeordnet, die dem als Lichtleiter wirkenden Lichtelement zugeordnet ist, wobei die Lichtquelle Licht emittiert, das in das Lichtelement einfällt. Bei dieser Ausführungsform ist das Lichtelement nicht die primäre Lichtquelle der Betätigungsvorrichtung, sondern dient als Lichtleiter, der das von der Lichtquelle eingespeiste Licht zuverlässig zum Außenbereich der Betätigungsvorrichtung führt, wodurch eine zufriedenstellende Beleuchtung des Betätigungselementes erzielt wird. Bei der Lichtquelle kann es sich beispielsweise um eine LED handeln, die innerhalb des Gehäuses der Betätigungsvorrichtung befestigt ist. Die LED kann auch unmittelbar an einer definierten Stelle, innerhalb des Gehäuses am Lichtelement befestigt sein. Das Licht, welches das Lichtelement zum Außenbereich verlässt, kann unterschiedliche Farben aufweisen, beispielsweise weiss, grün, rot, gelb ect. Hierbei kann es von Vorteil sein, dass das zweite Material, aus dem das Lichtelement ausgeführt ist, zumindest teillichttransparent ist.

Vorteilhafterweise weist das Lichtelement einen Kopfbereich mit einer Lichtaustrittsfläche auf, aus dem Licht das Lichtelement verlässt und in Richtung Außenbereich abstrahlt. Damit das Betätigungselement mit unterschiedlichen Farben beleuchtet werden kann, können mehrere Lichtquellen innerhalb des Gehäuses vorgesehen sein, die jeweils ein Primärlicht einer bestimmten Farbe emittieren, das in das Lichtelement geleitet wird. In einer weiteren Ausgestaltung der Erfindung können die innerhalb des Gehäuses angeordneten Lichtquellen als RGB-LED-Baugruppe ausgeführt sein. Hierbei emittiert eine erste Leuchtdiode (R) rotes Licht, eine zweite Leuchtdiode (G) grünes Licht und eine dritte Leuchtdiode (B) blaues Licht, wobei über eine Farbmischung beispielsweise weißes Licht in das Lichtelement eingespeist werden kann, das zur Beleuchtung des Betätigungselementes dient. Die genannten Dioden können auch einzeln angesteuert werden.

In einer weiteren Möglichkeit der Erfindung kann das zweite Material derart ausgeführt sein, dass es eine Veränderung der Wellenlänge des eintreffenden Lichtes der Lichtquelle bewirkt. Das bedeutet, dass das emittierte Licht der Lichtquelle in das Lichtelement gelangt, dort absorbiert wird und anschließend das Lichtelement ein "eigenes", konvertiertes Licht emittiert, welches zur Beleuchtung des Betätigungselementes dient. Beispielsweise kann bei dieser Ausführungsform das zweite Material fluoreszierendes Material als Leuchtstoff aufweisen, in dem insbesondere Phosphorpartikel enthalten sind. In einer möglichen Ausführungsform der Erfindung sind die Phosphorpartikel vorzugsweise in einem organischen Material eingebunden, welches Acryl oder Silikon sein kann. Das Primärlicht, welches durch die Lichtquelle emittiert wird, kann beispielsweise blaues Licht sein, das in das zweite Material eindringt und als kurzwelliges und damit energiereiches Licht das fluoreszierende Material anregt, wodurch ein langwelliges, energieärmeres gelbes Licht entstehen kann. Da nicht das gesamte blaue Licht (Primärlicht) im zweiten Material umgewandelt werden muss, kann die resultierende additive Mischung der Farben blau und gelb ein weißes Licht ergeben, welches durch das Lichtelement emittiert wird und in den Außenbereich gelangt und somit eine entsprechende Beleuchtung des Betätigungselementes bewirkt.

Ebenfalls ist es denkbar, dass durch Anlegen einer elektrischen Spannung am Lichtelement eine Veränderung der Wellenlänge des eintreffenden Lichtes der Lichtquelle erzielt werden kann, wodurch wirkungsvoll eine Farbänderung des austretenden Lichtes erreicht werden kann.

In einer vorteilhaften Ausführungsform steht der Druckbetätiger mit einer am beweglichen Teil angeordneten Schließvorrichtung zur schlüssellosen Aktivierung eines Ver- und Entriegelungsvorganges in Signalverbindung, wobei die Farbe des Lichtes, das das Lichtelement zum Außenbereich verlässt, eine Auskunft über den Verriegelungszustand der Schließvorrichtung gibt. Bei der Schließvorrichtung kann es sich beispielsweise um ein aus dem Stand der Technik bekanntes Aktiv oder Passiv Keyless-Entry-System handeln.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine erfindungsgemäße Betätigungsvorrichtung eines Kraftfahrzeuges mit einem Druckbetätiger,
- Fig. 2: eine Ansicht des Druckbetätigers gemäß der Schnittlinie I - I aus Fig. 1 und
- Fig.3: eine Draufsicht auf eine weitere Ausführungsform eines erfindungsgemäßen Druckbetätigers.

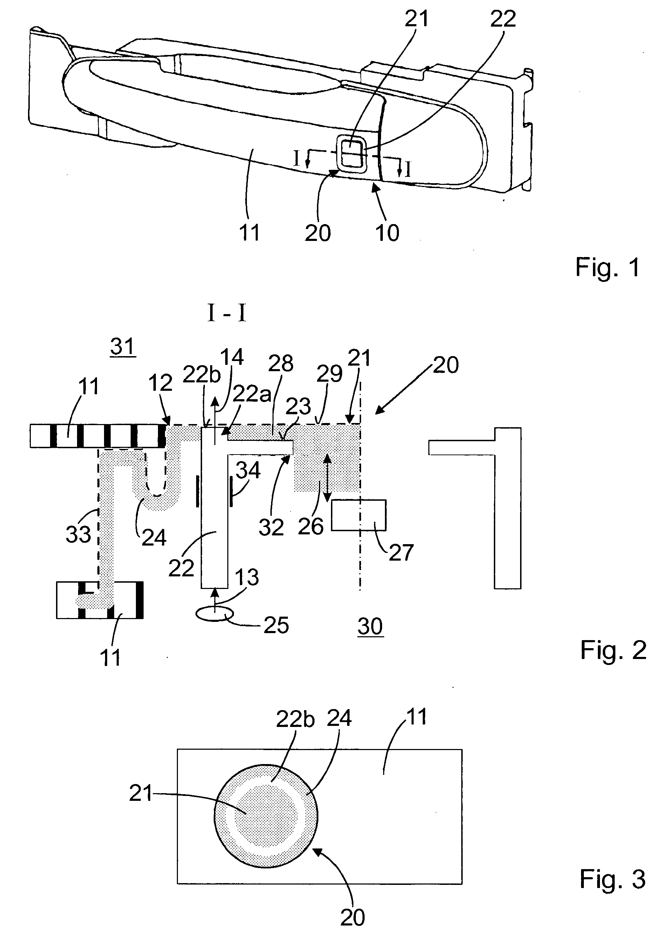

Fig. 1 zeigt eine perspektivische Ansicht eines Türgriffes 10 zum Schließen und Öffnen einer nicht dargestellten Tür eines Kraftfahrzeuges. Der Türgriff 10 weist hierbei ein Gehäuse 11 auf, das mit einer Aussparung 12 ausgeführt ist, die besonders deutlich in Fig. 2 zu erkennen. In dieser Aussparung 12 ist ein Druckbetätiger 20 eingelassen und füllt vollständig die Aussparung 12 des Gehäuses 11 aus. Der Druckbetätiger 20 ist eine Montageeinheit, die ein Betätigungselement 21, ein Lichtelement 22 sowie einen Randbereich 24 aufweist. Die genannten Elemente 21,22,24 stellen ein Zweikomponenten-Spritzgussbauteil dar. Das Betätigungselement 21 sowie der Randbereich 24 sind aus einem ersten Material ausgeführt. Das Lichtelement 22 ist hingegen aus einem zweiten Material gebildet. Erfindungsgemäß besteht das erste Material aus einem formelastischen, weicheren Kunststoff/Kunststoffen als das zweite Material.

Wie in Fig. 2 gut zu erkennen ist, ist der Randbereich 24 balgartig ausgeführt. Der Randbereich 24 ist ferner mit einem ersten Ende ausgeführt, das unmittelbar am Lichtelement 22 angeordnet ist. Das zweite Ende ist im Innenraum 30 positioniert und an einem Gehäuseteil 11 der Betätigungsvorrichtung 10 befestigt. Bei der Befestigung kann es sich um eine form- und/oder kraft- und/oder stoffschlüssige Verbindung handeln. Der Randbereich 24 dichtet unter anderem den Innenraum 30 zuverlässig vom Außenbereich 31 ab. Um eine zufriedenstellende Funktionsfähigkeit des Druckbetätigers 20 zu gewährleisten, ist im vorliegenden Ausführungsbeispiel der Randbereich 24 zumindest abschnittsweise bogenförmig ausgeführt. Hierdurch wird die Bewegung des Druckbetätigers 20 von einer ersten Stellung, die in Fig. 2 exemplarisch dargestellt ist, in eine nicht explizit dargestellte zweite Stellung begünstigt, bei der das Betätigungselement 21 einen innerhalb des Gehäuses 11 angeordneten Schalter 27 kontaktiert. Die Bewegungsrichtung des Betätigungselementes von der ersten Stellung in die zweite Stellung und umgekehrt ist durch den Doppelpfeil in Fig. 2 angedeutet. Darüber hinaus geht vom balgartigen Randbereich 24 in zweiter Stellung des Betätigungselementes 21 eine definierte Rückstellkraft aus, die den Druckbetätiger 20 wieder von der zweiten Stellung in die erste Stellung bewegt.

Wie in Fig. 2 gut zu erkennen ist, weist das Lichtelement 22 eine Auflagefläche 23 auf, auf der das Betätigungselement 21 bereichsweise angeordnet ist. Hierbei dient die Auflagefläche 23 des Lichtelementes 22 als tragendes Teil für das Betätigungselement 21. Das Betätigungselement 21 ist mit einem Schulterbereich 28, der auf der Auflagefläche 23 des Lichtelementes 22 angeordnet ist, und einem in dem Innenraum 30 des Gehäuses 11 sich erstreckenden Stößel 26 ausgeführt. Gemäß Fig. 2 weist der Stößel 26 einen definierten Abstand zum Schalter 27 auf. In zweiter Stellung des Druckbetätigers 20 kontaktiert der Stößel 26 den Schalter 27.

Gemäß des vorliegenden Ausführungsbeispiels ist das Lichtelement 22 zylinderartig ausgebildet, wobei die Auflagefläche 23 in einem Abstand zur Oberfläche 29 des T-förmigen Betätigungselementes 21 positioniert ist und ringartig mit einer Durchtrittsöffnung 32 ausgeführt ist, durch die der Stößel 26 sich erstreckt.

Im Innenraum 30 der Betätigungsvorrichtung 10 ist eine Lichtquelle 25 angeordnet, die dem als Lichtleiter wirkenden Lichtelement 22 zugeordnet ist, wobei die Lichtquelle 25 ein Primärlicht 13 emittiert, das in das Lichtelement 22 einfällt. Innerhalb des Lichtelementes 22 wird das Primärlicht 13 in Richtung des Betätigungselementes 21 geleitet und verlässt das Lichtelement 22 an seinem Kopfbereich 22a an der Lichtaustrittsfläche 22b. Das zweite Material, aus dem das Lichtelement 22 ausgeführt ist, ist lichtransparent ausgeführt, wodurch entsprechend eines definierten Bedarfs das Betätigungselement 21 über das Lichtelement 22 mit dem ausfallendem Licht 14 beleuchtet werden kann. Gemäß der dargestellten Ausführungsbeispiele ist der Kopfbereich 22a des Lichtelementes 22 zwischen dem Randbereich 24 und dem Betätigungselement 21 angeordnet, wobei der Kopfbereich 22a eine Leuchtkontur bildet, die das Betätigungselement 21 umläuft, welches in Fig. 1 sowie in Fig. 3 dargestellt ist. In Fig. 1 bildet die Leuchtkontur einen Ring der quadratförmig ist. In Fig. 3 kann es sich um einen kreisförmigen Ring handeln, der durch die Lichtaustrittsfläche 22b des Lichtelementes 22 gebildet ist. Bei der Lichtquelle 25 handelt es sich in den dargestellten Ausführungsbeispielen um eine LED. Weitere geometrische Formen der Leuchtkontur sind denkbar.

Damit der Druckbetätiger 20 zuverlässig von seiner ersten in seine zweite Stellung und umgekehrt bewegbar ist, ist im Ausführungsbeispiel gemäß Fig. 2 innerhalb des Innenraumes 30 des Gehäuses 11 ein Lager 34 angeordnet, das während der Bewegung des Druckbetätigers 20 das Lichtelement 22 zuverlässig führt.

Die Farbe des Lichtes 14, das das Lichtelement 22 zum Außenbereich 31 verlässt, gibt im vorliegenden Ausführungsbeispiel eine Auskunft bzw. eine Information über den Verriegelungszustand einer nicht dargestellten Schließvorrichtung des Kraftfahrzeuges. Hierbei handelt es sich bei der Schließvorrichtung um ein Passiv Keyless-Entry-System. Während sich ein Benutzer der Betätigungsvorrichtung 10 nähert, erfolgt bei einer positiven Identifikation der Person eine Beleuchtung des Betätigungselementes 21. Über die Farbe der Beleuchtung des Betätigungselementes 21 kann der Benutzer feststellen, ob die Tür entriegelt ist, welches beispielsweise über ein weißes Licht kenntlich gemacht werden kann, oder verriegelt ist, welches zum Beispiel über ein rotes Licht visualisiert wird.

In Fig. 2 ist ferner eine Schicht 33 dargestellt, die alternativ auf den Druckbetätiger 20 aufgebracht werden kann, die eine Schutzwirkung für den Druckbetätiger 20 darstellt. Damit das Licht 14 aus der Lichtaustrittsfläche 22b gut sichtbar für den Benutzer in den Außenbereich 31 austreten kann, ist die Schutzschicht 33 lichttransparent ausgeführt.

Während der Benutzer den Druckbetätiger 20 über seine Hand betätigt, wird das Betätigungselement 21 mit dem Lichtelement 22 sowie dem Randbereich 24 in Richtung des Innenraumes 30 nach unten bewegt. Hierbei führt der Druckbetätiger 20 einen Hub von der ersten Stellung in die zweite Stellung aus, der im vorliegenden Ausführungsbeispiel geringer ist als 1 mm. Während der Benutzer Kraft auf das Betätigungselement 21 ausübt, entsteht an der Oberfläche 29 des Betätigungselementes 21 eine plastische Verformung, die jedoch durch die "härtere" Auflagefläche 23 begrenzt ist.

### Bezugszeichenliste

- 10: Betätigungsvorrichtung
- 11: Gehäuse
- 12: Aussparung
- 13: Licht
- 14: Licht, Beleuchtungslicht für Betätigungselement 21
- 20: Druckbetätiger
- 21: Betätigungselement
- 22: Lichtelement
- 22a: Kopfbereich
- 22b: Lichtaustrittsfläche
- 23: Auflagefläche
- 24: Randbereich
- 25: Lichtquelle
- 26: Stößel
- 27: Schalter
- 28: Schulterbereich
- 29: Oberfläche
- 30: Innenraum
- 31: Außenbereich
- 32: Durchtrittsöffnung
- 33: Schutzschicht
- 34: Lager

## Patentansprüche

1. Betätigungsvorrichtung (10) zum Schließen und Öffnen eines beweglichen Teils eines Kraftfahrzeuges, insbesondere einer Tür, einer Heckklappe oder dergleichen, mit einem Gehäuse (11), das mit einer Aussparung (12) ausgeführt ist, in der ein Betätigungselement (21) und ein Lichtelement (22) angeordnet ist,
wobei das Lichtelement (22) und das Betätigungselement (21) in einem innerhalb der Aussparung (12) vorgesehenen Druckbetätiger (20) integriert sind,
das Lichtelement (22) eine Auflagefläche (23) aufweist, auf der das Betätigungselement (21) zumindest teilweise angeordnet ist, und
das Betätigungselement (21) aus einem ersten Material und das Lichtelement (22) aus einem zweiten Material ausgeführt sind,
**dadurch gekennzeichnet,**
**dass** das erste Material und das zweite Material aus Kunststoff sind, und wobei das erste Material aus einem weicheren Kunststoff gebildet ist als das zweite Material.

2. Betätigungsvorrichtung (10) nach Anspruch 1,
**dadurch gekennzeichnet,**
**dass** der Druckbetätiger (20) einen aus dem ersten Material ausgeführten Randbereich (24) aufweist, der balgartig ausgeführt ist.

3. Betätigungsvorrichtung (10) nach Anspruch 2,
**dadurch gekennzeichnet,**
**dass** der Druckbetätiger (20) mit dem Betätigungselement (21), dem Lichtelement (22) und dem Randbereich (24) ein Bauteil bilden, das durch ein Mehrkomponenten-Spritzgussverfahren hergestellt ist.

4. Betätigungsvorrichtung (10) nach einem der vorhergehenden Ansprüche,
**dadurch gekennzeichnet,**
**dass** das erste Material ein anorganischer Zweikomponenten-Elastomerwerkstoff ist.

5. Betätigungsvorrichtung (10) nach einem der vorhergehenden Ansprüche,
**dadurch gekennzeichnet,**
**dass** das zweite Material lichttransparent ausgeführt ist.

6. Betätigungsvorrichtung (10) nach einem der vorhergehenden Ansprüche,
**dadurch gekennzeichnet,**
**dass** das Lichtelement (22) einen Kopfbereich (22a) mit einer Lichtaustrittsfläche (22b) aufweist, aus der Licht (13) das Lichtelement (22) verlässt.

7. Betätigungsvorrichtung (10) nach einem der vorhergehenden Ansprüche,
**dadurch gekennzeichnet,**
**dass** innerhalb des Gehäuses (11) eine Lichtquelle (25) angeordnet ist, die dem als Lichtleiter wirkenden Lichtelement (22) zugeordnet ist, wobei die Lichtquelle (25) Licht (13) emittiert, das in das Lichtelement (22) einfällt.

8. Betätigungsvorrichtung (10) nach einem der vorhergehenden Ansprüche,
**dadurch gekennzeichnet,**
**dass** der Druckbetätiger (20) in eine erste und in eine zweite Stellung bewegbar ist, wobei in der zweiten Stellung das Betätigungselement (21) einen innerhalb des Gehäuses (11) angeordneten Schalter (27) kontaktiert.

9. Betätigungsvorrichtung (10) nach einem der vorhergehenden Ansprüche,
**dadurch gekennzeichnet,**
**dass** eine lichttransparente Schutzschicht (33) auf dem Druckbetätiger (20) vorgesehen ist.

10. Betätigungsvorrichtung (10) nach Anspruch 2,
**dadurch gekennzeichnet,**
**dass** der Kopfbereich (22a) zwischen dem Randbereich (24) und dem Betätigungselement (21) angeordnet ist, wobei der Kopfbereich (22a) eine Leuchtkontur aufweist, die das Betätigungselement (21) umläuft.

11. Betätigungsvorrichtung (10) nach einem der vorhergehenden Ansprüche,
**dadurch gekennzeichnet,**
**dass** das Betätigungselement (21) T-förmig ausgeführt ist.

12. Betätigungsvorrichtung (10) nach einem der vorhergehenden Ansprüche,
**dadurch gekennzeichnet,**
**dass** das Betätigungselement (21) einen Schulterbereich (28), der auf der Auflagefläche (23) des Lichtelementes (22) angeordnet ist, und einen in den Innenraum (30) des Gehäuses (11) sich erstreckenden Stößel (26) aufweist.

13. Betätigungsvorrichtung (10) nach Anspruch 12,
**dadurch gekennzeichnet,**
**dass** das Lichtelement (22) zylinderartig ausgebildet ist, wobei die Auflagefläche (23) in einem Abstand zur Oberfläche (29) des Betätigungselementes (21) positioniert ist und ringartig mit einer Durchtrittsöffnung (32) ausgeführt ist, durch die der Stößel (26) sich erstreckt.

14. Betätigungsvorrichtung (10) nach Anspruch 2,
**dadurch gekennzeichnet,**
**dass** in der zweiten Stellung des Druckbetätigers (20) vom Randbereich (24) eine Rückstellkraft ausgeht, die den Druckbetätiger (20) zurück in seine erste Stellung bringt.

15. Betätigungsvorrichtung (10) nach einem der vorhergehenden Ansprüche,
**dadurch gekennzeichnet,**
**dass** das erste Material einen Härtegrad von Shore A 15 bis Shore A 90 aufweist.

16. Betätigungsvorrichtung (10) nach einem der vorhergehenden Ansprüche,
**dadurch gekennzeichnet,**
**dass** im Innenraum (30) des Gehäuses (11) ein Lager (34) angeordnet ist, das während der Bewegung des Druckbetätigers (20) das Lichtelement (22) führt.

17. Betätigungsvorrichtung (10) nach einem der vorhergehenden Ansprüche,
**dadurch gekennzeichnet,**
**dass** das Lichtelement (22) eine OLED ist.

18. Betätigungsvorrichtung (10) nach einem der vorhergehenden Ansprüche,
**dadurch gekennzeichnet,**
**dass** das zweite Material derart ausgeführt ist, dass es eine Veränderung der Wellenlänge des eintreffenden Lichtes (13) der Lichtquelle (25) bewirkt.

19. Betätigungsvorrichtung (10) nach einem der vorhergehenden Ansprüche,
**dadurch gekennzeichnet,**
**dass** der Druckbetätiger (20) mit einer am beweglichen Teil angeordneten Schließvorrichtung zur schlüssellosen Aktivierung eines Ver- und Entriegelungsvorganges in Signalverbindung steht, wobei die Farbe des Lichtes (14), das das Lichtelement (22) zum Außenbereich (31) verlässt, eine Auskunft über den Verriegelungszustand der Schließvorrichtung gibt.

## Claims

1. An actuating device (10) for closing and opening a movable part of a motor vehicle, in particular a door, a luggage compartment door or the like, having a housing (11), which is configured with a cut-out (12), in which an actuating element (21) and a light element (22) are arranged,
wherein the light element (22) and the actuating element (21) are integrated in a pressure actuator (20) provided inside the cut-out (12),
the light element (22) has a contact face (23), on which at least part of the actuating element (21) is arranged, and
the actuating element (21) consists of a first material and the light element (22) consists of a second material,
**characterised in that**
the first material and the second material are plastic, and wherein the first material is formed from a softer plastic than the second material.

2. The actuating device (10) according to Claim 1, **characterised in that**
the pressure actuator (20) has an edge region (24) which consists of the first material and is configured in a bellows-like manner.

3. The actuating device (10) according to Claim 2, **characterised in that**
the pressure actuator (20) together with the actuating element (21), the light element (22) and the edge region (24) form a part which is produced by a multicomponent injection-moulding process.

4. The actuating device (10) according to any one of the preceding claims,
**characterised in that**
the first material is an inorganic two-component elastomer material.

5. The actuating device (10) according to any one of the preceding claims,
**characterised in that**
the second material is transparent to light.

6. The actuating device (10) according to any one of the preceding claims,
**characterised in that**
the light element (22) has a head region (22a) having a light exit face (22b), from which light (13) exits the light element (22).

7. The actuating device (10) according to any one of the preceding claims,
**characterised in that**
a light source (25) is arranged inside the housing (11), which light source is assigned to the light element (22), which acts as a light guide, wherein the light source (25) emits light (13), which shines into the light element (22).

8. The actuating device (10) according to any one of the preceding claims,
**characterised in that**
the pressure actuator (20) can be moved into a first and a second position, wherein the actuating element (21) makes contact with a switch (27) arranged inside the housing (11) when in the second position.

9. The actuating device (10) according to any one of the preceding claims,
**characterised in that**
a light-transparent protective layer (33) is provided on the pressure actuator (20).

10. The actuating device (10) according to Claim 2, **characterised in that**
the head region (22a) is arranged between the edge region (24) and the actuating element (21), wherein the head region (22a) has a light contour, which runs around the actuating element (21).

11. The actuating device (10) according to any one of the preceding claims,
**characterised in that**
the actuating element (21) is T-shaped.

12. The actuating device (10) according to any one of the preceding claims,
**characterised in that**
the actuating element (21) has a shoulder region (28), which is arranged on the contact face (23) of the light element (22), and a tappet (26), which extends into the interior (30) of the housing (11).

13. The actuating device (10) according to Claim 12, **characterised in that**
the light element (22) is cylindrical, wherein the contact face (23) is positioned at a distance from the surface (29) of the actuating element (21) and is configured in an annular manner with a passage opening (32) through which the tappet (26) extends.

14. The actuating device (10) according to Claim 2, **characterised in that**
when the pressure actuator (20) is in the second position, a restoring force emanates from the edge region (24), which restoring force puts the pressure actuator (20) back into its first position.

15. The actuating device (10) according to any one of the preceding claims,
**characterised in that**
the first material has a Shore hardness from Shore A 15 to Shore A 90.

16. The actuating device (10) according to any one of the preceding claims,
**characterised in that**
a bearing (34) is arranged in the interior (30) of the housing (11), which bearing guides the light element (22) during the movement of the pressure actuator (20).

17. The actuating device (10) according to any one of the preceding claims,
**characterised in that**
the light element (22) is an OLED.

18. The actuating device (10) according to any one of the preceding claims,
**characterised in that**
the second material is configured in such a manner that it effects a change in the wavelength of the incident light (13) of the light source (25).

19. The actuating device (10) according to any one of the preceding claims,
**characterised in that**
the pressure actuator (20) has a signal connection with a closing device arranged on the movable part for keyless activation of a locking and unlocking process, wherein the colour of the light (14) exiting the light element (22) to the outer region (31) gives information on the locking state of the closing device.

## Revendications

1. Dispositif d'actionnement (10) destiné à la fermeture et l'ouverture d'une partie mobile d'un véhicule automobile, en particulier d'une portière, d'un hayon ou analogues, avec
un boîtier (11) qui est doté d'un évidement (12) dans lequel sont disposés un élément d'actionnement (21) et un élément lumineux (22),
sachant que l'élément lumineux (22) et l'élément d'actionnement (21) sont intégrés dans un actionneur par pression (20) prévu à l'intérieur de l'évidement (12),
que l'élément lumineux (22) présente une surface d'appui (23) sur laquelle est au moins partiellement disposé l'élément d'actionnement (21),
et que l'élément d'actionnement (21) est réalisé en un premier matériau et l'élément lumineux (22) en un second matériau,
**caractérisé en ce que** le premier matériau et le second matériau sont des matières plastiques, sachant que le premier matériau est une matière plastique plus souple que le second matériau.

2. Dispositif d'actionnement (10) selon la revendication 1, **caractérisé en ce que** l'actionneur par pression (20) présente une région de bord (24) constituée du premier matériau et réalisée du genre soufflet.

3. Dispositif d'actionnement (10) selon la revendication 2, **caractérisé en ce que** l'actionneur par pression (20) forme avec l'élément d'actionnement (21), l'élément lumineux (22) et la région de bord (24) une pièce qui est fabriquée par un procédé de moulage par injection à plusieurs composants.

4. Dispositif d'actionnement (10) selon l'une des revendications précédentes, **caractérisé en ce que** le premier matériau est un matériau élastomère anorganique à deux composants.

5. Dispositif d'actionnement (10) selon l'une des revendications précédentes, **caractérisé en ce que** le deuxième matériau est réalisé transparent à la lumière.

6. Dispositif d'actionnement (10) selon l'une des revendications précédentes, **caractérisé en ce que** l'élément lumineux (22) présente une région de tête (22a) dotée d'une surface de sortie de lumière (22b) par laquelle la lumière (13) quitte l'élément lumineux (22).

7. Dispositif d'actionnement (10) selon l'une des revendications précédentes, **caractérisé en ce qu'**une source lumineuse (25) est disposée à l'intérieur du boîtier (11) et est associée à l'élément lumineux (22) jouant le rôle de guide de lumière, sachant que la source lumineuse (25) émet de la lumière (13) qui est incidente dans l'élément lumineux (22).

8. Dispositif d'actionnement (10) selon l'une des revendications précédentes, **caractérisé en ce que** l'actionneur par pression (20) peut être déplacé dans une première et une seconde positions, sachant que dans la seconde position, l'élément d'actionnement (21) entre en contact avec un commutateur (27) disposé à l'intérieur du boîtier (11).

9. Dispositif d'actionnement (10) selon l'une des revendications précédentes, **caractérisé en ce qu'**une couche de protection (33) transparente à la lumière est prévue sur l'actionneur par pression (20).

10. Dispositif d'actionnement (10) selon la revendication 2, **caractérisé en ce que** la région de tête (22a) est disposée entre la région de bord (24) et l'élément d'actionnement (21), sachant que la région de tête (22a) présente un contour lumineux qui entoure l'élément d'actionnement (21).

11. Dispositif d'actionnement (10) selon l'une des revendications précédentes, **caractérisé en ce que** l'élément d'actionnement (21) est réalisé en forme de T.

12. Dispositif d'actionnement (10) selon l'une des revendications précédentes, **caractérisé en ce que** l'élément d'actionnement (21) présente une région d'épaulement (28) qui est disposée sur la surface d'appui (23) de l'élément lumineux (22), et un poussoir (26) s'étendant dans l'espace intérieur (30) du boîtier (11).

13. Dispositif d'actionnement (10) selon la revendication 12, **caractérisé en ce que** l'élément lumineux (22) est réalisé du genre cylindre, sachant que la surface d'appui (23) est positionnée à distance de la surface (29) de l'élément d'actionnement (21) et est réalisée annulaire avec une ouverture de passage (32) à travers laquelle s'étend le poussoir (26).

14. Dispositif d'actionnement (10) selon la revendication 2, **caractérisé en ce que**, dans la seconde position de l'actionneur par pression (20), une force de rappel part de la région de bord (24) et ramène l'actionneur par pression (20) dans sa première position.

15. Dispositif d'actionnement (10) selon l'une des revendications précédentes, **caractérisé en ce que** le premier matériau présente un degré de dureté Shore A de 15 à 90.

16. Dispositif d'actionnement (10) selon l'une des revendications précédentes, **caractérisé en ce qu'**un palier (34), qui guide l'élément lumineux (22) pendant le mouvement de l'actionneur par pression (20), est disposé dans l'espace intérieur (30) du boîtier (11).

17. Dispositif d'actionnement (10) selon l'une des revendications précédentes, **caractérisé en ce que** l'élément lumineux (22) est une diode électroluminescente organique (OLED).

18. Dispositif d'actionnement (10) selon l'une des revendications précédentes, **caractérisé en ce que** le second matériau est réalisé de telle sorte qu'il produit une modification de la longueur d'onde de la lumière incidente (13) de la source lumineuse (25).

19. Dispositif d'actionnement (10) selon l'une des revendications précédentes, **caractérisé en ce que** l'actionneur par pression (20) est en liaison de signaux avec un dispositif de fermeture disposé sur la partie mobile afin d'activer sans clé un processus de verrouillage et de déverrouillage, sachant que la couleur de la lumière (14) qui quitte l'élément lumineux (22) vers la région extérieure (31) fournit une information sur l'état de verrouillage du dispositif de fermeture.
